# EUROPEAN PATENT APPLICATION

(11) **EP 1 129 984 A1**
(43) Date of publication of application: **05.09.2001**
(21) Application number: 01200731.6
(22) Date of filing: 22.02.2001
(51) Int. Cl.: B66F 11/04, F03D 11/04

(54) **Apparatus and method for accessing a construction at sea**

(30) Priority: 22.02.2000 NL 1014463
(71) Applicant: N.V. Kema, 6812 AR Arnhem (NL)
(72) Inventor: Semplonius, Hendrik, 6957 AN Laag Soeren (NL); Hutting, Hendrikus Kornelis, 6602 XA Wijchen (NL); Rikken, Jacobus Fredericus, 6922 NE Duiven (NL)
(74) Representative: Eveleens Maarse, Pieter

(57) **Abstract**

The invention relates to an apparatus to gain access to a construction (1) at see, whereby the apparatus is adapted to transport itself over the sea bed and that the apparatus comprises a boom (20) of which the reach extents until the vincinity of the highest part of the construction which is to be accessed.

As the apparatus moves itself over the sea bed, it is stable within a certain flatness of the sea bed; the apparatus rests on the sea bed. The apparatus is herewith independent of the movement of the interface between water and air which are dependent of the weather.

This is in particular important when high constructions should be reached. This requires a high construction which itself is already less stable.

According to preferred embodiment the apex of the boom is adapted for mechanical connection with the highest part of the construction which should be worked.

## Description

The invention relates to an apparatus for working on or gaining acces to a construction at see.

Such apparatuses are genually known in the form of ships, driving work platforms like hoisting platforms or helicopters.

These prior art apparatuses can only be used under favourable weather as necessary with personal risks of the staff.

The aim of the present invention is to provide an apparatus which can also be used safely under less favourable weather, so that the not functioning of the construction can immediately be remediate and that losses of stand still are limited. This can lead to substantial economic advantage.

This aim is reached in that the apparatus is fit for moving over the sea bed, and that the apparatus comprises a boom, of which the reach extend until in the vincinity of the highest part of the construction which is to be accessed.

As the apparatus moves itself over the sea bed, it is stable within a certain flatness of the sea bed; the apparatus rests on the sea bed. The apparatus is herewith independent of the movement of the interface between water and air which are dependent of the weather.

This is in particular important when high constructions should be reached. This requires a high construction which itself is already less stable.

According to prefered embodiment the apex of the boom is adapted for mechanical connection with the highest part of the construction which should be worked.

This feature leads to extra stability so that the sensitivity for influences of the weather is lessened and the safety of working is improved, in particular during the execution of work when a connection is present between the apex of the boom and the construction on to which work should be done or access should be gained to.

According to an more specific embodiment the apex of the boom is connectable to a part of the construction on which work should be executed by means of a transport element.

The transport element allows to transport heavy tools or parts of the apparatus to the construction or vice versa, and indeed with high rate of stability, in which the suspension force is substantially provided by the construction so that the apparatus can be made less heavy. This has an attractive influence on the costs and the use in areas with a limited stability of the soil.

The apparatus can be provided of hydraulicly control stamps to bring the platform horizontally, and to give the apparatus stability to lift the wheels or the caterpillar tracks substantially high above the sea bed to avoid bed erosion in areas with unstable beds and flow in the water and to lift wheels or the caterpillar tracks from the bed if these have been sunk into the bed.

The apparatus can also be provided of air chambers to lessen the wheel pressures in areas with a unstable sea bed.

The apparatus can be provided of an automatic control which allows the apparatus to drive to and through over some meters continuously during parking thereof to avoid sinking in the sea bed or to avoid accesive bed erosion around the construction.

According to another prefered embodiment the apparatus is fit for executing work to wind turbine located at sea on a pylon.

It is attractive to locate wind turbines at sea in relation with the higher windspeed prevaling at sea. This allows higher power to be generated. It is also attractive to locate the wind turbines some kilometers from the coast. Then it is possible to reach the windturbines with an apparatus according to the invention so that an attraction application for the apparatus according to the invention is obtained.

Further, the vehicle can be provided of a cabin, which is generally above water level, and which can be used for storage of material or as a cabin for maintenance and repair staff. Of course it is possible to make the cabin moveable until unter the water level; it has to be made watertight in such a situation.

Further the apparatus can be provided of a platform which can be moved until above the water level. This platform can be used to obtain access to pylon for instance for maintenance repair work, whereas above the water level or until above the water level a moveable jetty can be provided to be able to reach the vehicle with a boat when it is at sea. Further, the apparatus concerns a method for reaching a location at sea in which the construction at sea is reached by passing at least a part of the distance between the coast and the construction driving over the sea bed.

Subsequently the invention will be further illustrated with the help of the following drawings, in which:

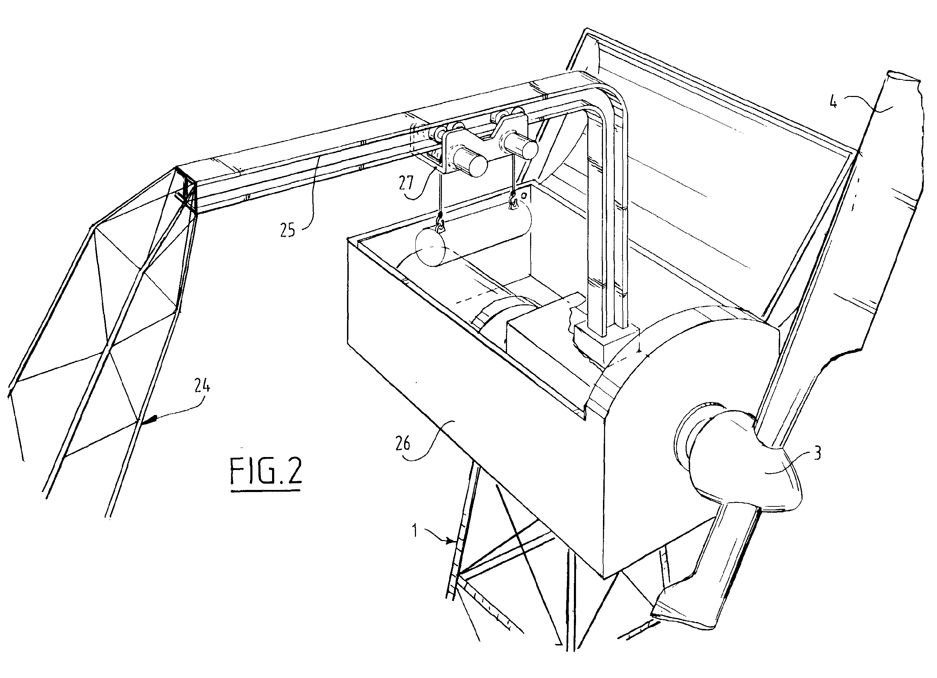

figure 2 shows a schematic view of a trussed pylon with an apparatus located there on for executing work on a wind turbine located on a pylon; and

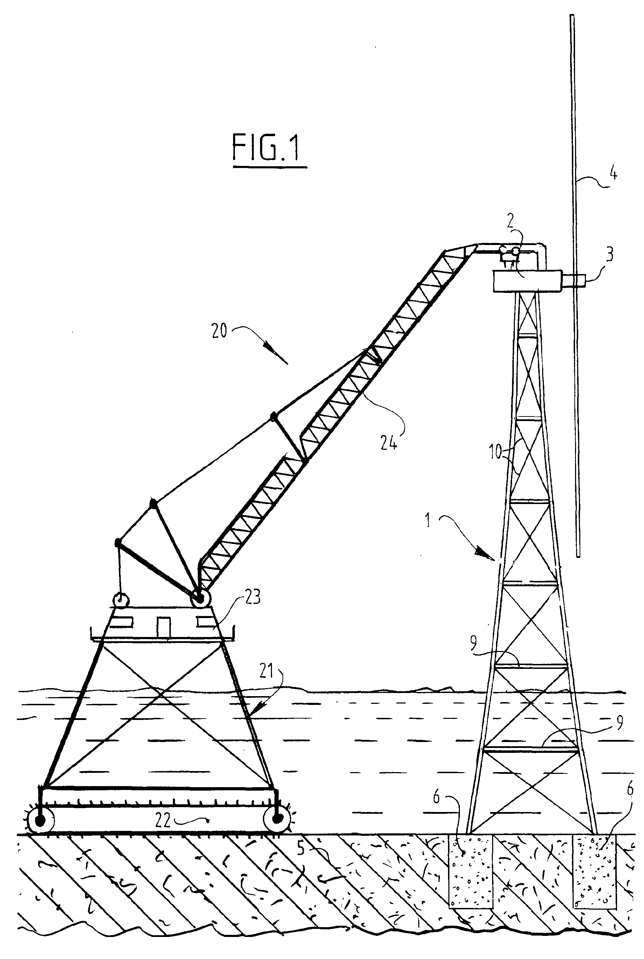

figure 2 shows a perspective detailed view of the configuration shown in figure 1.

In figure 1 a trussed pylon has been shown, on to which a generator 2 has been located. On the shaft of the generator 2 a rotor 4 has been provided. Of course a gear box could have been provided between the rotor and the generator.

The pylon 1 has a height of several tens of meters, and it is foreseen to locate such pylons on some kilometers distance from the coast. Under such circumstances there can be a need to execute maintenance or for removing breakedowns at the wind turbine. Therefor use can be made of the vehicle which has been designated by 20 in its whole, and which comprises a frame 21, which has been provided of wheels 22, with which the vehicle 20 can move over the sea bed. For the driving thereof use can be made of a diesel hydraulic drive unit.

At the opposite of the frame 21 a platform 23 has been provided, onto which the driving and control elements of the apparatus have been provided. Also a cabin for control can be located. Above the platform 23 a boom 24 has been located, of which the elevation angle can be adjusted, and of which the length can be adjusted to adapted to the different heights of the wind turbines. It is essential that there is a connection possibility between the upper side of the boom 24 and the generator 2 or the housing in which the generator has been provided, or the upper end of the pylon 1. Therewith it becomes possible to hoist heavy loads with the apparatus as described.

Such a coupling has been shown in more detail in figure 2. It shows how the apex of the boom 24 ends in a profiled spar 25, which is used as a crane track. The end of the profiled spar 25 has been bended and can be located in a coupling element provided in the housing 26 on the pylon 1. For the hoisting of heavy load use can be made of a cat 27, which is moveable along the crane track 25.

It is possible that this configuration can amended without the departing from the invention.

## Claims

1. Apparatus to gain access to a construction at see, **characterized that** the apparatus is adapted to transport itself over the sea bed and that the apparatus comprises a boom of which the reach extents until the vincinity of the highest part of the construction which is to be accessed.

2. Apparatus as claimed in claim 1, **characterized that** the apex of the boom has been adapted for mechanical coupling with a part of the construction on which should be worked.

3. Apparatus as claimed in claim 2, **characterized in that** the apex of the boom is adapted for coupling with the part of the construction on which should be worked to a transport element.

4. Apparatus as claimed in claim 3, **characterized in that** the transport element has been adapted for excerting a downward force on the construction during the loading of the transport element.

5. Apparatus as claimed in claim 1, 2, 3, 4, **characterized in that** the apparatus has been adapted for working on or the gaining of access to a wind turbine at sea.

6. Apparatus as claimed in of the preceding claims, **characterized in that** the vehicle comprises stamps which have been adapted to rest at the sea bed.

7. Vehicle as claimed in one of the preceding claims, **characterized in that** the vehicle comprises a cabin which is always above the water level.

8. Apparatus as claimed in one of the preceding claims, **characterized in that** the vehicle comprises air chambers.

9. Apparatus as claimed in one of the preceding claims, **characterized in that** the apparatus comprises a jetty.

10. Apparatus as claimed in one of the preceding claims, **characterized in that** the vehicle has been adapted for repeatedly driving to and through over a small distance with a low speed.

11. Method for reaching a construction at sea, **characterizing that** at least a part of the path between the coast and the construction is past driving over the sea bed.
